# EUROPÄISCHE PATENTANMELDUNG

(11) **EP 2 192 377 A1**
(43) Veröffentlichungstag der Anmeldung: **02.06.2010**
(21) Anmeldenummer: 09176777.2
(22) Anmeldetag: 23.11.2009
(51) Int. Cl.: G01B 7/16, G01B 21/32, G01G 3/14, G01L 1/22, G01M 5/00, H04L 12/423, H04L 12/66

(54) **Funksensormodul und System zur Bauwerksüberwachung**

(30) Priorität: 01.12.2008 DE 102008059879
(71) Anmelder: Bundesanstalt für Materialforschung und -prüfung (BAM), 12205 Berlin (DE)
(72) Erfinder: Werner, Klaus-Dieter, 12209 Berlin (DE); Kammermeier, Michael, 14467 Potsdam (DE); Bartholmai, Matthias, 14163 Berlin (DE); Köppe, Enrico, 14467 Potsdam (DE)
(74) Vertreter: Zimmermann & Partner

(57) **Zusammenfassung**

Ein Funksensormodul (100) umfaßt zumindest eine Sensoreinheit (110), die eingerichtet ist, eine Dehnungsmessung so durchzuführen, daß die Dehnung über eine Messung der Lade- und/oder Entladezeit eines Kondensators bestimmt wird, und zumindest eine Funkeinheit (120), die eingerichtet ist, mit weiteren Funksensormodulen ein sich selbst organisierendes Funknetzwerk zu bilden.

## Beschreibung

Die vorliegende Erfindung betrifft ein Funksensormodul sowie ein System zur Bauwerksüberwachung, das mehrere solcher Funksensormodule umfaßt.

Zur Vermeidung von Unfällen mit Sach- und Personenschäden ist die Schadensfrüherkennung an Bauwerken von großer Bedeutung. Oftmals ist die Installation eines geeigneten Meßsystems äußerst aufwendig und problembehaftet. In letzter Zeit häufen sich Schadensfälle an Bauwerken, bei denen es ohne vorherige Ankündigung zum Bauteilversagen mit nachfolgendem Teileinsturz kommt. Gerade bei Hallenkonstruktionen führt dies häufig zu verletzten und auch getöteten Personen. Die Eissporthalle in Bad Reichenhall oder die Abfertigungshalle auf dem Pariser Flughafen Charles-de-Gaulle sind typische Vertreter für derartige Unfälle. Im Bereich der Verkehrsinfrastruktur stehen die hohe Altersstruktur von Brücken und das steigende Verkehrsaufkommen (besonders Schwerverkehr) in deutlichem Widerspruch zueinander. Schadensfälle wie der Einsturz der Mississippi-Brücke oder das Absacken der Inntal-Autobahnbrücke haben die Notwendigkeit von Kontrollmechanismen in Bezug auf die Standfestigkeit von Bauwerken aufgezeigt. Die wirkungsvollste Methode, die sichere Funktion und Nutzung der verwendeten Bauteile und Konstruktionen zu gewährleisten, ist eine kontinuierliche Strukturüberwachung (auch als "Structural Health Monitoring" bezeichnet) durch messtechnische Systeme mit für die jeweilige Anwendung geeigneten Sensoren.

Auf ein Bauwerk einwirkende Belastungen äußern sich in hohem Maße in Form von mechanischen Spannungen, die auf Teile des Bauwerks wirken oder als Eigenspannungen in Bauteilen bestehen. Dehnungsmessstreifen (DMS) sind die am häufigsten eingesetzten Sensoren, um Spannungen zu messen. Bei allen konventionellen Messsystemen zur experimentellen Spannungsanalyse besteht eine zusammenhängende Verkabelung zwischen Meßstellen und Meßgerät. Für viele Anwendungen stellt diese Verkabelung ein Problem dar und verursacht den Großteil an Kosten und Aufwand des gesamten Meßsystems. Außerdem ist jedes Kabel eine potentielle Fehlerquelle im Rahmen von Installation und Betrieb eines Meßsystems.

Im Rahmen der Beanspruchungsanalyse und Zustandsüberwachung von bestehenden Tragwerken, Anlagen und Komponenten mit hohem Gefährdungspotential wird zunehmend eine hoch-flexible Instrumentierung mit Sensoren (insbesondere Dehnungsmessstreifen) gefordert. Dies beinhaltet u.a. die jederzeitige Erweiterung/Reduzierung der Sensoranzahl bzw. den Sensoraustausch ohne Neukonfiguration des Meßsystems, die freie Sensorpositionierung ohne die Einschränkungen einer kabelgebundenen Instrumentierung, geringen Wartungsaufwand und hohe Energieeffizienz bei vergleichsweise sehr langer Meßdauer (z.B. Batterietausch, Rekalibrierung).

Vor diesem Hintergrund stellt die vorliegende Erfindung ein Funksensormodul gemäß Anspruch 1 sowie ein System zur Bauwerksüberwachung gemäß Anspruch 17 zur Verfügung. Weitere Aspekte, Einzelheiten Vorteile und Merkmale der vorliegenden Erfindung ergeben sich aus den Unteransprüchen, der Beschreibung sowie den beigefügten Zeichnungen.

Gemäß einem Ausführungsbeispiel wird ein Funksensormodul bereitgestellt, das zumindest eine Sensoreinheit, die eingerichtet ist, eine Dehnungsmessung so durchzuführen, daß die Dehnung über eine Messung der Lade- und/oder Entladezeit eines Kondensators bestimmt wird, und zumindest eine Funkeinheit, die eingerichtet ist, mit weiteren Funksensormodulen ein sich selbst organisierendes Funknetzwerk zu bilden, umfaßt. Mindestens zwei solcher Funksensormodule können zusammen ein System zur Bauwerksüberwachung bilden, wobei die mindestens zwei Funksensormodule ein selbst-organisiertes Funknetzwerk bilden.

Das beschriebene Meßsystem setzt sich aus einer Anzahl von Netzwerkknoten zusammen, die sowohl als Datensender als auch als Datenempfänger dienen. Jeder Netzwerkknoten ist in Form eines eigenständigen Moduls konzipiert, das die Anbindung von Dehnungsmeßstreifen-Sensorik an die Funkeinheit realisiert. Dadurch ist das System anwendungsoptimiert zur Langzeitstrukturüberwachung insbesondere von Bauwerken und Infrastrukturen geeignet, bei denen eine Verkabelung Schwierigkeiten bereitet. Das hier vorgestellte Messsystem kann weiterhin wenig aufwendig und kostengünstig installiert und gewartet werden. Weiterhin kann ein anwenderfreundlicher Betrieb mit hohen technischen Anforderungen an Zuverlässigkeit und Präzision kombinieren werden.

Gemäß einem Ausführungsbeispiel ist die Sensoreinheit eingerichtet, den Kondensator wiederholt zu laden und entladen, und ist weiterhin eingerichtet ist, die Lade- und/oder Entladezeit über mindestens einen Widerstand sowie mindestens einen mit diesem in Reihe geschalteten ersten Schalter, mindestens einen mit dem Widerstand in Reihe geschalteten zweiten Schalter und über mit dem Widerstand in Reihe nebeneinander parallel geschalteten Schaltern zu messen. Typischweise kann die Sensoreinheit zur Messung der Lade- und/oder Entladezeit einen Zeit-Digital-Wandler aufweisen.

Sensoreinheiten mit den oben beschriebenen Eigenschaften sind aus der DE 101 19 080 bekannt, deren Gesamtoffenbarung im Hinblick auf den konstruktiven Aufbau als auch der Meßmethode hiermit in die vorliegende Anmeldung durch Verweisung aufgenommen wird. Bei einer solchen Sensoreinheit wird der gleiche Nutzwiderstand in unterschiedlicher Kombination mit den auswechselbaren parasitären Schalterwiderständen gemessen, so dass der Störanteil der Schalterwiderstände eliminiert werden kann. Dabei sind mit den jeweiligen Widerständen mehrere Schalter in Reihe geschaltet, wobei die Schalter zueinander parallel geschaltet sind. Dies ermöglicht, Entlademessungen nicht nur bei der Entladung eines Widerstands über einen Schalter, sondern auch bei der Entladung über den anderen Schalter und bei der Entladung bei gleichzeitig durchgeschalteten beiden Schaltern vorzunehmen und aufgrund der gemessenen unterschiedlichen Ladezeiten die Innenwiderstände der Schalter und damit deren Einfluss auf das Meßergebnis vollständig zu eliminieren, so daß die Innenwiderstände der Schalter keinerlei Rolle bei der Bestimmung des Meßergebnisses mehr spielen und dieses nicht verfälschen können. Weiterhin kann die Zeitmessung nicht beim Laden, sondern beim Entladen vorgenommen werden, wodurch der Ladevorgang auch mit einem geringen Strom durchgeführt werden kann, so daß schwächere Stromquellen verwendet werden können.

Gemäß einem weiteren Ausführungsbeispiel ist die Funkeinheit so eingerichtet, daß die Sende- und/oder Empfangszeiten zum Erfassen und/oder Weiterleiten von Daten mit den Sende- und/oder Empfangszeiten anderer Funksensormodule abstimmbar sind. Insbesondere können die Sende- und/oder Empfangszeiten zum Erfassen und/oder Weiterleiten von Daten über Vektoren für eine Zeitschlitzzuweisung bereitgestellt werden.

Funkeinheiten mit den oben beschriebenen Eigenschaften sind aus der DE 10 2006 048 361 bekannt, deren Gesamtoffenbarung im Hinblick auf den konstruktiven Aufbau der einzelnen Funkeinheiten als auch des Gesamtsystems sowie insbesondere des Verfahrens zum selbst-organisierten Aufbau des Funknetzwerks hiermit in die vorliegende Anmeldung durch Verweisung aufgenommen wird. Bei solchen Funkeinheiten kann die kontinuierliche und dadurch energieaufwendige Empfangsbereitschaft, die bei herkömmlichen Netzwerken erforderlich ist, reduziert werden, indem benachbarte Knoten ihre Sende- und/oder Empfangszeiten aufeinander abstimmen. Wenn Sender und Empfänger gleichzeitig aufwachen, der Sender kurz dem Empfänger seine Daten schickt und sich dann beide wieder schlafenlegen, können dadurch die Zeiten, in denen der Sende-/Empfangsbaustein eingeschaltet ist, deutlich verkürzt und der erforderliche Energieaufwand entsprechend reduziert werden. Dabei erfolgt der Aufbau des Netzwerks bzw. die Eingliederung eines Knotens in das Netzwerk typischerweise in vier Phasen, nämlich die Suche nach benachbarten Knoten, die Auswahl eines Vater-Knotens nach vorgebbaren Kriterien, das Ausverhandeln eines Zeitslots upstream von Vater zu Kind und der Übergang in zeitsynchronisiertes Arbeiten.

Gemäß noch einem weiteren Ausführungsbeispiel umfaßt das Funksensormodul weiterhin eine Einrichtung zum Erkennen des Abfalls einer Haupt-Versorgungsspannung. Dabei kann die Einrichtung einen Komparator umfassen, der die Versorgungsspannung mit einer Referenzspannung vergleicht und so einen Abfall der Versorgungsspannung automatisch erkennen kann. Alternativ oder zusätzlich kann die Einrichtung auch einen mechanisch betätigbaren Schalter umfassen. Dieser kann beispielsweise vom Wartungspersonal betätigt werden, um einen bevorstehende Ausfall der Spannungsversorgung, beispielsweise beim Austausch von Batterien o.ä., anzukündigen.

Gemäß einer Weiterbildung umfaßt das Funksensormodul weiterhin eine bei Abfall der Haupt-Versorgungsspannung zuschaltbare Hilfs-Versorgungsspannungsquelle, z.B. einen Kondensator, die eine Hilfs-Versorgungsspannung an ein Steuermodul der Funkeinheit bereitstellt. Auf diese Weise kann ein Datenverlust im Steuermodul bzw. im ganzen Funksensormodul vermieden werden.

Gemäß noch einer Weiterbildung ist das Steuermodul eingerichtet, vorbestimmte Funktionen des Funksensormoduls zu unterdrücken, solange die Hilfs-Versorgungsspannung anliegt. Insbesondere können diese vorbestimmten Funktionen das Senden und/oder Empfangen von Daten und/oder das Messen von Sensordaten umfassen. Dies sind der energieaufwendige Funktionen, die die Hilfs-Versorgungsspannungsquelle schnell erschöpfen können. Daher kann die Funktion mittels der Hilfs-Versorgungsspannungsquelle länger aufrecht erhalten werden, wenn solche energieaufwendigen Funktionen unterdrückt werden, solange nur die Hilfsquelle zur Verfügung steht. Ist beispielsweise der Batteriewechsel abgeschlossen, kann sich das Funksensormodul wieder selbstätig in das Funknetzwerk einbinden und die aufgelaufenen Daten dann senden.

Gemäß einem weiteren Ausführungsbeispiel der vorliegenden Erfindung kann das Funksensormodul weiterhin einen zwischen der Funkeinheit und der Sensoreinheit angeordneten Schalter umfassen, der eingerichtet ist, eine Spannungsversorgung der Sensoreinheit zwischen zwei Messungen zu unterbrechen. Insbesondere kann der Schalter mit dem Steuermodul der Funkeinheit derart verbunden sein, daß er über das Steuermodul ein- und ausgeschaltet werden kann. Dabei kann das Ein- bzw. Ausschalten des Schalters beispielsweise über das Bereitstellen bzw. Nichtbereitstellen einer Versorgungsspannung an den Schalter über das Steuermodul erfolgen.

Auf diese Weise kann der Energieverbrauch des Funksensormoduls weiterhin enorm verringert werden. So verbraucht beispielsweise der ohnehin energiesparende Sensor gemäß DE 101 19 080 typischerweise zwischen 100 und 500 µA. Durch Verwendung des beschriebenen Schalters kann dieser Wert jedoch auf unter 5 µA gesenkt werden.

Gemäß noch einem Ausführungsbeispiel der vorliegenden Erfindung umfaßt das Funksensormodul weiterhin Abschirmelemente, die zwischen kapazitiv beeinflußten Leitungen des Funksensormoduls angeordnet sind. Auf diese Weise kann das Funksensormodul kleiner gebaut werden, ohne daß die Zuverlässigkeit und/oder Meßgenauigkeit nachteilig beeinflußt werden.

Anhand der beigefügten Zeichnungen werden nun Ausführungsbeispiele der vorliegenden Erfindung erläutert. Dabei zeigt:
Fig. 1 eine schematische Darstellung eines Funksensormodul gemäß einem Ausführungsbeispiel.
Fig. 2 eine schematische Darstellung eines selbst-organisierten Funknetze gemäß einem Ausführungsbeispiel.
Fig. 3 eine schematische Darstellung einer Schaltung bei einem Funksensormodul gemäß einem Ausführungsbeispiel.
Fig. 4 eine schematische Darstellung einer Schaltung bei einem Funksensormodul gemäß einem weiteren Ausführungsbeispiel.
Fig. 5 die Temperaturabhängigkeit eines Funksensorsystems gemäß einem Ausführungsbeispiel.
Fig. 6 die Temperaturabhängigkeit der Meßelektronik gemäß einem Ausführungsbeispiel.
Fig. 7 die Schwankungsbreite der Meßwerte je Temperaturstufe bei einem Funksensorsystem gemäß einem Ausführungsbeispiel.

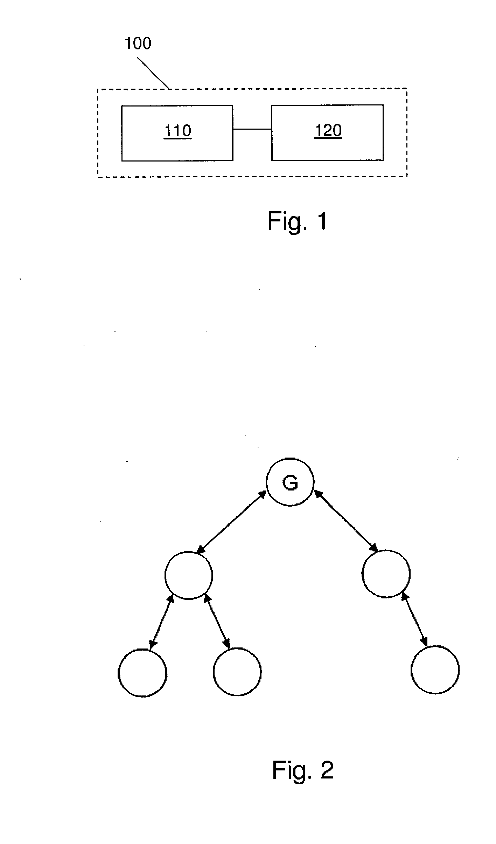

Fig. 1 zeigt eine schematische Darstellung eines Funksensormodul 100 gemäß einem Ausführungsbeispiel der vorliegenden Erfindung. Das Funksensormodul 100 weist zumindest eine Sensoreinheit 110 auf, die eingerichtet ist, eine Dehnungsmessung durchzuführen. Dabei wird die Dehnungsmessung so durchgeführt, daß die Dehnung über eine Messung der Lade- und/oder Entladezeit eines Kondensators bestimmt wird. Weiterhin weist das Funksensormodul 100 zumindest eine Funkeinheit 120, die eingerichtet ist, mit weiteren Funksensormodulen ein sich selbst organisierendes Funknetzwerk zu bilden.

Gemäß einem Ausführungsbeispiel ist die Sensoreinheit 100 eingerichtet, den Kondensator wiederholt zu laden und entladen. Dabei wird die Lade- und/oder Entladezeit über mindestens einen Widerstand sowie mindestens einen mit diesem in Reihe geschalteten ersten Schalter, mindestens einen mit dem Widerstand in Reihe geschalteten zweiten Schalter und über mit dem Widerstand in Reihe nebeneinander parallel geschalteten Schaltern gemessen. Die Zeitmessung wird mittels eines Zeit-Digital-Wandlers (time-to-digital converter, TDC) durchgeführt wird. Wie bereits erwähnt sind Dehnungsmeßsysteme mit den oben beschriebenen Eigenschaften aus der DE 101 19 080 bekannt. Bei einer solchen Sensoreinheit 100 wird anstatt der üblichen Wheatstone'schen Brückenschaltung das beschriebene alternative Meßverfahren genutzt. Nach diesem Prinzip ist eine hochpräzise Dehnungsmessung bei einem äußerst geringen Energiebedarf realisierbar. Weitere Vorteile wie ein großer Messbereich, eine hohe Temperaturstabilität und ein großer Anwendungstemperaturbereich sowie variable Schaltungsmöglichkeiten werden realisiert. Typischerweise wird von der Sensoreinheit 110 ein Meßbereich von Dehnungen > ± 20.000 µm/m und ein Abtastintervall zwischen 24 h und 1 s im Netzwerkbetrieb bzw. bis zu 1/100 s im Einzelbetrieb bereitgestellt. Die Meßelektronik der Sensoreinheit ist typischerweise über eine programmierbare SPI-Schnittstelle (Serial Peripheral Interface) an das Funknetzwerk angeschlossen. Die Konfiguration erfolgt dabei über ein Steuermodul, das alle Schnittstellen des Funksensormoduls verwaltet.

Weiterhin ist die Funkeinheit 110 des Funksensormoduls 100 so eingerichtet, daß sie den Aufbau eines selbst-organisierten Funknetzwerks erlaubt. Ein solches selbst-organisiertes Netzwerk ist in Fig. 2 gezeigt. Das dort gezeigte Meßsystem weist eine Anzahl von Netzwerkknoten (d.h. Funksensormodulen) auf, die sowohl als Datensender als auch als Datenempfänger dienen. Jedes Netzwerkmodul setzt sich aus der Funkeinheit 120 und der Sensoreinheit 110 zusammen. Die Funkeinheit 120 bildet mit weiteren im wesentlichen baugleichen Funksensormodulen 100 ein sich selbst-organisierendes Netzwerk Typischerweise wird das lizenzfreie 868 MHz-ISM-Band für die Funkübertragung verwendet. Um große oder schwer zugängliche Anwendungsobjekte zuverlässig überwachen zu können, wird eine ausreichende Funkreichweite gewährleistet. Mittels der in Fig. 2 gezeigten sogenannten Multihop-Architektur wird eine Netzwerkstabilität erreicht, die den Austausch einzelner Module und die Integration zusätzlicher Module ohne Unterbrechung des Netzwerkbetriebs ermöglicht. Die Sensoreinheit 120 verwendet typischerweise Dehnungsmeßstreifen (DMS) zur Spannungsanalyse des Bauwerks. Weiterhin können Anschlüsse für zusätzliche Sensorik in dem Funksensormodul 100 bereitgestellt sein.

Die Funktechnik im selbst-organisierten Netzwerk beruht auf einem takt- und skalierbaren Multihop-Zeitschlitzverfahren. Dieses Verfahren sowie Funkeinheiten mit den oben beschriebenen Eigenschaften sind aus der DE 10 2006 048 361 bekannt. Aufgrund der Selbstorganisation des Netzwerks ist die Inbetriebnahme vergleichsweise einfach. Die Meßstellen müssen lediglich angeschlossen und das Modul eingeschaltet werden, dann baut sich das Netz automatisch auf (Selbstorganisation). Die Datenübertragung von einem Funksensormodul zu einer Erfassungseinheit muß nicht auf direktem Weg stattfinden, sondern kann von Netzwerkmodul zu Netzwerkmodul in mehreren Schritten realisiert werden (Multihop). Das verwendete Routing nutzt energieeffiziente Hardware und kombiniert lange Lebenszeiten mit kurzen Ereignisbenachrichtigungen über eine lange Kette von Knoten. Dies wird durch zeitsynchronisierte Kommunikation und extrem kurze aktive Sende- und Empfangsperioden erreicht. Das Routing verfügt typischeweise über Redundanzmechanismen und Sicherungen gegen Übertragungsfehler. Redundanz wird beispielsweise durch Nutzung alternativer Routen im Netzwerk erreicht. Übertragungsfehler können durch fehlende Bestätigungen bemerkt und durch erneute Übertragung, schnellen Nachbarwechsel und schließlich Wechsel des Subkanals des 868 MHz-Bandes kompensiert werden.

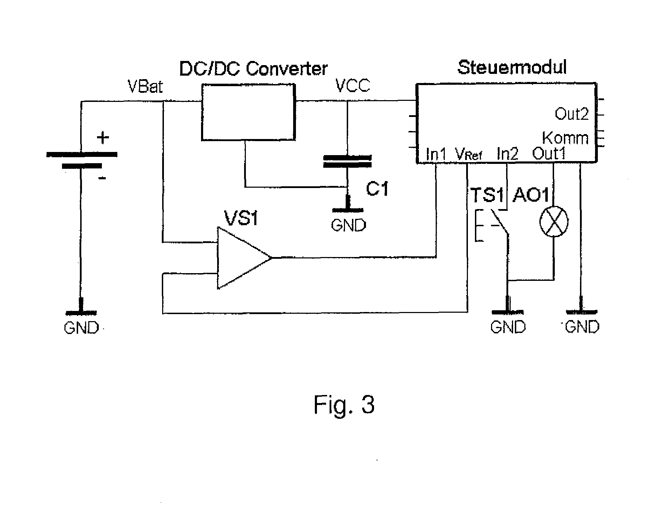

Fig. 3 zeigt eine schematische Darstellung einer Schaltung bei einem Funksensormodul 100 gemäß einem Ausführungsbeispiel. Die in Fig. 3 gezeigte Schaltung dient insbesondere dazu, den Batteriewechsel bei einem Funksensormodul zu erleichtern. Bei dem in der DE 10 2006 048 361 beschriebenen System wird nach Ausfall der Versorgungsspannung eines Funksensormoduls (z.B. durch einen Batteriewechsel) ein Neuaufbau der Netzwerkstruktur im Bereich aller über diesen Knoten angebundenen weiteren Knoten notwendig. Aufgrund des verwendeten Multihop-Algorithmus benötigt dieser Vorgang relativ viel Energie. Die in Fig. 3 gezeigte Schaltung dient zur Erhöhung der Netzwerksstabilität und Energieeffizienz, da im Falle eines Batteriewechsels die Netzwerkstruktur erhalten bleibt und ein erneuter Netzaufbau mit dem notwendigen Durchlaufen aller Aufbauphasen vermieden wird.

Das der Schaltung gemäß Fig. 3 zugrundeliegende Prinzip liegt im automatischen bzw. manuell ausgelösten Registrieren des Batteriewechsels und dem Veranlassen entsprechender Maßnahmen durch ein Steuermodul der Funkeinheit 110. Grundlage dafür ist die schnelle Erkennung einer Span-nungsänderung und die Überbrückung der Zeit des Batterietausches. Zu diesem Zweck weist das Funksensormodul 100 eine Einrichtung zum Erkennen des Abfalls einer Haupt-Versorgungsspannung, z.B. der Batteriespannung VBat, auf.

Gemäß einem Ausführungsbeispiel kann diese Einrichtung einen Komparator VS1 umfassen, der die Haupt-Versorgungsspannung VBat mit einer Referenzspannung VRef vergleicht. Im Falle eines unangekündigten Batteriewechsels erkennt das Steuermodul den abrupten Abfall der Versorgungsspannung VBat aufgrund der Batterieentnahme mittels Spannungsschalter (Komparator) VS1. Sinkt die Versorgungsspannung VBat unter die Referenzspannung VRef, so informiert der Komparator VS1 das Steuermodul über den Spannungseingang In durch ein Steuersignal. Die Verarbeitung des vom Komparator VS 1 gesandten Signals erfolgt innerhalb weniger µs. Als Folge wird eine zeitliche Überbrückung des Versorgungsspannungsausfalls durch einen Kondensator C1 gewährleistet, der eine Hilfs-Versorgungsspannung an das Steuermodul bereitstellt. Weiterhin wird die schnelle und energiearme Datenverarbeitung auf dem Steuermodul aufrechterhalten. Jedoch werden vorbestimmte Funktionen des Funksensormoduls 100 unterdrückt, solange die Hilfs-Versorgungsspannung anliegt. Insbesondere energiereiche Arbeiten, wie das Senden und Empfangen von Routingpaketen und das Messen von Sensordaten, werden nicht durchgeführt bzw. zeitlich verschoben. Auf diese Weise kann das Netzwerkrouting deaktiviert werden, wobei das System dennoch aktiv bleibt, da die Informationen über die Netzwerkstruktur erhalten bleiben.

Gemäß einer weiteren Ausführungsform kann zusätzlich oder alternativ zu dem Komparator VS1 ein mechanisch betätigbarer Schalter TS1 bereitgestellt werden. Mittels des Schalters TS 1 kann das Wartungspersonal die Entnahme der Batterien ankündigen. Typischerweise ist der Schalter TS 1 als mechanischer Taster ausgebildet, der ein elektronisches Signal Eingang In2 des Steuermoduls anlegt. Nach Betätigung des Schalters TS 1 schaltet das Steuermodul die Spannungsversorgung auf die Hilfsquelle C1 um. Anschließend wird ein optisches oder akustisches Signal an einem Ausgabegerät AO1 erzeugt, das dem Nutzer die Bereitschaft zum Batterietausch anzeigt. Auf diese Wese gehen dem Steuermodul durch den Batterietausch keine Informationen verloren und laufende Prozesse können weitergeführt werden.

Neben den oben beschriebenen Einrichtungen bzw. Schaltungen kann gemäß einem weiteren Ausführungsbeispiel zur Realisierung des Batteriewechselverfahrens das Routingprotokoll erweitert werden. Dabei wird eine Warte- bzw. Robustheitspuffer zur Übermittlung der Daten implementiert. Zusätzlich werden in den Zeitslots der betroffenen Knoten Mechanismen zum wiederholten Versenden der Datenpakte und zur Empfangsprüfung integriert. Bei unerwartetem Batterietausch können so die gesammelten Daten zwischengespeichert werden, bis nach Einsetzen der neuen Batterien wieder die volle Leistung zum Senden und Empfangen bereitsteht. Im Falle eines angekündigten Batteriewechsels wird in den Zeitslots der betroffenen Knoten jeweils ein Paket an alle verbundenen Knoten (Kinder- und Vaterknoten) gesendet, das auch diesen Knoten den Batteriewechsel ankündigt. Es wird sodann das Routing ausgesetzt. Nach Abschluß des Batteriewechsels wird dieses den benachbarten Knoten wiederum sigalisiert und das Routing fortsetzt. Nach dem Batteriewechsel werden typischerweise alle gesammelten Daten normal gesendet ohne das Routing neu initialisieren bzw. die Netzaufbauphasen erneut durchlaufen werden muß.

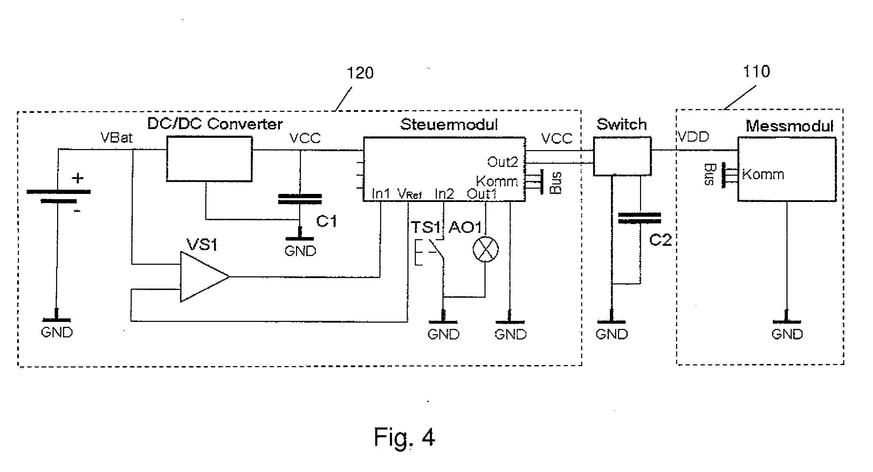

Fig. 4 zeigt eine schematische Darstellung einer Schaltung bei einem Funksensormodul 100 gemäß einem weiteren Ausführungsbeispiel. Dabei ist zwischen der Funkeinheit 120 und der Sensoreinheit 110 ein Schalter Switch, C2 angeordnet. Der Schalter ist eingerichtet, eine Spannungsversorgung VDD der Sensoreinheit 110 zwischen zwei Messungen zu unterbrechen. Der DC/DC-Wandler der Funkeinheit 120 erzeugt aus der Batterie-Versorgungsspannung VBat die Versorgungsspannung VCC. Diese wird an der schaltbaren Switch/C2-Kombination auf die Versorgungsspannung VDD der Sensoreinheit 110 eingekoppelt. Auf diese Weise kann der Schalters über das Bereitstellen bzw. Nichtbereitstellen der Versorgungsspannung VCC über das Steuermodul ein- und ausgeschaltet werden. Da die Spannungsein- und -auskopplung keine zusätzlichen Pulsströme erzeugt, wird ein definierter Neustart der Sensoreinheit 110 ermöglicht. Somit werden die gleichen Meßergebnisse erzeugt, wie im ursprünglichen Betrieb ohne Unterbrechung der Spannungsversorgung. Durch die in Fig. 4 dargestellte speziell schaltbare DC/DC-Switch-C2-Kombination kann der benötigte Strom zwischen zwei Messungen ohne Beeinträchtigung der Meßgenauigkeit auf unter 5 µA reduziert werden. Im Vergleich dazu verbraucht die in DE 101 18 080 beschriebene Sensoreinheit im Sleep-Modus zwischen zwei Messungen zwischen 100 und 500 µA. Aufgrund der Schaltung gemäß Fig. 4 läßt sich somit der Energieverbrauch enorm senken, wodurch die Betriebszeiten der Funksensormodule zwischen zwei Batteriewechseln stark verlängert werden.

Gemäß noch einem Ausführungsbeispiel der vorliegenden Erfindung umfaßt das Funksensormodul weiterhin Abschirmelemente, die zwischen kapazitiv beeinflußten Leitungen des Funksensormoduls angeordnet sind. Auf diese Weise kann das Funksensormodul kleiner gebaut werden, ohne daß die Zuverlässigkeit und/oder Meßgenauigkeit nachteilig beeinflußt werden.

Ein typisches Anwendungsszenario zum Einsatz eines oben beschriebenen Funksensormodul-Systems ist die Langzeitstrukturüberwachung von Brücken mittels Dehnungsmessungen. Um den Einfluß der Umgebungsbedingungen Temperatur und Luftfeuchte meßstellenabhängig registrieren und kompensieren zu können, sind die Module entsprechend mit Temperatur- bzw. Thermohydrosensoren ausgestattet. Dabei kann die Konstruktion der Module in zwei Bauformen realisiert werden. Zum einen kann das Funksensormodul als handliches Innenraummodul und Demonstrator mit Gehäuseschutzart IP54 ausgebildet sein. Dieses Modul bietet die Möglichkeit zwei DMS in Halbbrückenschaltung und einen Temperatursensor anzuschließen. Die Sensoren bzw. deren Kabelzuführungen werden über Lötanschlüsse mit dem Modul verbunden.

Eine zweite Bauform ist für den Außeneinsatz unter Bewitterungsbeanspruchung konzipiert und hat die Schutzart IP66 und einen Einsatzbereich von -30 bis 80 °C. In einem solchen Modul können zwei Anschlußvarianten realisiert werden. Gemäß einer ersten Variante können Anschlüsse für 8 DMS-Halbbrücken und 4 Temperatursensoren in dem Funksensormodul bereitgestellt werden. Gemäß einer anderen Variante können Anschlüsse für zwei DMS-Rosetten mit je einem Thermohydrosensor zur Meßdatenkompensation je Meßstelle bereitgestellt werden.

Abgesehen von den Möglichkeiten der Meßdatenerfassung und des Einsatzrahmens sind Funktionen und Verwendung beider Bauformen identisch; sie können ohne Umstände im gleichen Netzwerk betrieben werden. Die Konfiguration der Meßdatenerfassung inklusive Einstellung der Abtastrate, Nullabgleich und Plausibilitätsprüfung kann direkt an jedem Modul unabhängig von externen Geräten erfolgen. Typischerweise sind Modi für Inbetriebnahme und Wartung vorgesehen. Die Bedienung kann dabei mittels Joystick und Display erfolgen. Die Meßdatenübertragung wird in der Regel über das Netzwerkrouting realisiert, kann aber auch im Einzelbetrieb über eine USB-Schnittstelle eines jeweiligen Funksesorsmoduls ablaufen. Zur gemeinsamen Erfassung und Zusammenführung der Daten aller Meßstellen eines Sensornetzwerkes wird ein Gateway an einem Rechner betrieben. Dessen Software steuert und kontrolliert den Betrieb des Netzwerks und ermöglicht eine Visualisierung zur vorläufigen Datenauswertung. Ein Datenexport in geeignete Softwareformate zur umfassenden Verarbeitung und Analyse der Meßdaten wird typischerweise bereitgestellt.

Im folgenden werden die vorliegenden Erkenntnisse bezüglich Messgenauigkeit, Linearität und Stabilität erläutert. Mehrere Probemessungen ohne Dehnungsbelastung wurden über 24 h mit einem Abtastintervall von 5 s bei Raumbedingungen durchgeführt. Die Schwankungsbreite der DMSKanäle liegt über der gesamten Meßdauer im Bereich von ± 1 µm/m. Eine signifikante temperaturunabhängige Drift konnte nicht festgestellt werden. Die Meßgenauigkeit der Temperaturmessungen liegt im Bereich von ± 1 °C.

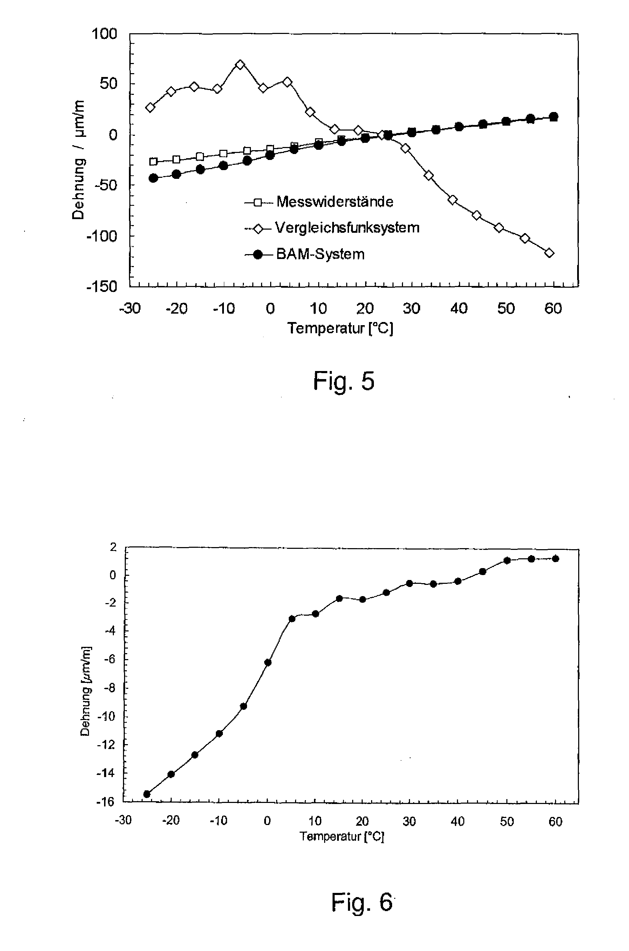

Um die Temperaturstabilität des Systems zu untersuchen, wurden Messungen in einer Temperaturkammer im Bereich zwischen -25 und 60°C durchgeführt, deren Ergebnisse in Fig. 5 dargestellt sind. Zum Vergleich wurden ein kommerziell erhältliches funkbasiertes Meßsystem und ein kabelgebundenes Vielkanalmeßsystem herangezogen. Als Quasi-Sensoren wurden hochpräzise Meßwiderstände (Fa. Vishay S102C, 350 Ohm, 0,01 %, ± 2.0 ppm/°C) eingesetzt. Alle Meßsysteme wurden auf eine Nulldehnung bei Raumtemperatur eingestellt. Das System gemäß einem Ausführungsbeispiel der vorliegenden Erfindung (in Fig. 5 als BAM-System bezeichnet) und das Vergleichsfunksystem wurden den Temperaturänderungen ausgesetzt, während das kabelgebundene System außerhalb der Temperaturkammer blieb und ausschließlich der Untersuchung des Temperatureinflusses auf die Meßwiderstände diente. Die Temperatur wurde stufenweise um 5°C erhöht und jeweils für 30 min konstant gehalten, um eine thermische Anpassung der Meßsysteme zu erreichen.

Fig. 5 zeigt die hohe Temperaturstabilität des BAM-Systems. Im Gegensatz zum Vergleichsfunksystem ist der Temperatureinfluß auf das BAM-System zu einem großen Anteil auf den Temperaturgang der verwendeten Präzisionwiderstände zurückzuführen. Subtrahiert man die Meßergebnisse des kabelgebundenen Systems, erhält man in Näherung die Temperaturabhängigkeit der Meßelektronik des BAM-Systems, die in Fig. 6 dargestellt ist. Bezogen auf den Gesamttemperaturbereich liegt diese bei 0,2 (µm/m)/K.

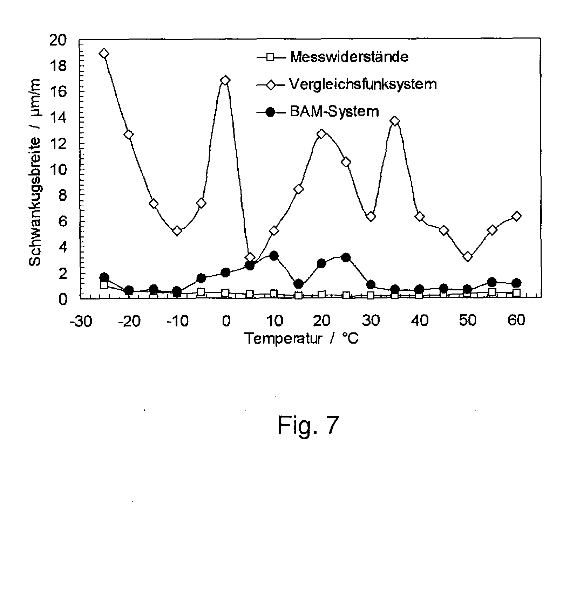

Um die temperaturabhängige Meßgenauigkeit der Systeme vergleichen zu können, wurde die Schwankungsbreite aller Meßwerte der gleichen Temperaturstufe ermittelt. Die Ergebnisse sind in Fig. 7 gezeigt. Dabei ist zu berücksichtigen, daß die Anpassung der Systeme an die jeweilige Temperatur erst im Laufe der Stufe erfolgt und somit einen Einfluß auf die jeweilige Schwankungsbreite hat. Das BAM-System weist eine mittlere Schwankungsbreite von 1,4 µm/m (Maximum von 3,3 µm/m) auf im Vergleich zu 8,6 µm/m (18,9 µm/m) des Referenzfunksystems und 0,3 µm/m (1,0 µm/m) der Meßwiderstände ohne temperaturbelastete Meßelektronik.

Im Hinblick auf diese Ergebnisse zeichnen sich selbst-organisierte Funksensornetzwerke gemäß den Ausführungsbeispielen der vorliegenden Erfindung durch große Energieeffizienz und gute Temperaturstabilität aus. Weiterhin sind sie einfach zu installieren und zu warten.

Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Funksensormodul (100), umfassend
zumindest eine Sensoreinheit (110), die eingerichtet ist, eine Dehnungsmessung so durchzuführen, daß die Dehnung über eine Messung der Lade- und/oder Entladezeit eines Kondensators bestimmt wird, und
zumindest eine Funkeinheit (120), die eingerichtet ist, mit weiteren Funksensormodulen ein sich selbst organisierendes Funknetzwerk zu bilden.

2. Funksensormodul nach Anspruch 1, wobei die Sensoreinheit (110) eingerichtet ist, den Kondensator wiederholt zu laden und entladen, und weiterhin eingerichtet ist, die Lade- und/oder Entladezeit über mindestens einen Widerstand sowie mindestens einen mit diesem in Reihe geschalteten ersten Schalter, mindestens einen mit dem Widerstand in Reihe geschalteten zweiten Schalter und über mit dem Widerstand in Reihe nebeneinander parallel geschalteten Schaltern gemessen wird.

3. Funksensormodul nach Anspruch 1 oder 2, wobei die Sensoreinheit (110) zur Messung der Lade- und/oder Entladezeit einen Zeit-Digital-Wandler aufweist.

4. Funksensormodul nach einem der vorhergehenden Ansprüche, wobei die Sensoreinheit einen Dehnungsmeßstreifen umfaßt.

5. Funksensormodul nach einem der vorhergehenden Ansprüche, wobei die Funkeinheit (120) so eingerichtet ist, daß die Sende- und/oder Empfangszeiten zum Erfassen und/oder Weiterleiten von Daten mit den Sende- und/oder Empfangszeiten anderer Funksensormodule abstimmbar sind.

6. Funksensormodul nach Anspruch 5, wobei die Sende- und/oder Empfangszeiten zum Erfassen und/oder Weiterleiten von Daten über Vektoren für eine Zeitschlitzzuweisung bereitgestellt werden.

7. Funksensormodul nach einem der vorhergehenden Ansprüche, weiterhin umfassend eine Einrichtung (VS1; TS1) zum Erkennen des Abfalls einer Haupt-Versorgungsspannung (VBat).

8. Funksensormodul nach Anspruch 7, wobei die Einrichtung einen Komparator (VS1) umfaßt, der die Haupt-Versorgungsspannung (VBat) mit einer Referenzspannung (VRef) vergleicht.

9. Funksensormodul nach Anspruch 7, wobei die Einrichtung einen mechanisch betätigbaren Schalter (TS1) umfaßt.

10. Funksensormodul nach einem der Ansprüche 7 bis 9, weiterhin umfassend eine bei Abfall der Haupt-Versorgungsspannung (VBat) zuschaltbare Hilfs-Versorgungsspannungsquelle (C1), die eine Hilfs-Versorgungsspannung an ein Steuermodul der Funkeinheit (120) bereitstellt.

11. Funksensormodul nach Anspruch 10, wobei das Steuermodul eingerichtet ist, vorbestimmte Funktionen des Funksensormoduls (100) zu unterdrücken, solange die Hilfs-Versorgungsspannung anliegt.

12. Funksensormodul nach einem der vorhergehenden Ansprüche, weiterhin umfassend einen zwischen der Funkeinheit (120 und der Sensoreinheit (110) angeordneten Schalter (Switch, C2), der eingerichtet ist, eine Spannungsversorgung (VDD) der Sensoreinheit (110) zwischen zwei Messungen zu unterbrechen.

13. Funksensormodul nach Anspruch 12, wobei der Schalter (Switch, C2) mit dem Steuermodul der Funkeinheit (120) derart verbunden ist, daß er über das Steuermodul ein- und ausgeschaltet werden kann.

14. Funksensormodul nach einem der vorhergehenden Ansprüche, weiterhin umfassen Abschirmelemente, die zwischen kapazitiv beeinflußten Leitungen des Funksensormoduls angeordnet sind.

15. System zur Bauwerksüberwachung, umfassend mindestens zwei Funksensormodule (100) nach einem der vorhergehenden Ansprüche, wobei die mindestens zwei Funksensormodule ein selbst-organisiertes Funknetzwerk bilden.
